Europäisches Patentamt

European Patent Office

Office européen des brevets

(19)

(11) Veröffentlichungsnummer: **0 336 075**
**A1**

(12) **EUROPÄISCHE PATENTANMELDUNG**

(21) Anmeldenummer: 89102385.5

(22) Anmeldetag: 11.02.89

(51) Int. Cl.4: **A01D 33/02 , A01D 17/22**

(30) Priorität: 31.03.88 DE 3810942

(43) Veröffentlichungstag der Anmeldung:
11.10.89 Patentblatt 89/41

(84) Benannte Vertragsstaaten:
**AT BE FR GB NL SE**

(71) Anmelder: **Franz Grimme**
**Landmaschinenfabrik GmbH & Co. KG.**
**Wiesenstrasse 10**
**D-2845 Damme 1(DE)**

(72) Erfinder: **Welp, Johannes**
**Osterdammer Str. 9**
**D-2845 Damme(DE)**

(74) Vertreter: **Busse & Busse Patentanwälte**
**Postfach 1226 Grosshandelsring 6**
**D-4500 Osnabrück(DE)**

(54) **Kartoffelerntemaschine.**

(57) Die Kartoffelerntemaschine umfaßt eine Rodevorrichtung (1), ein sich an die Rodevorrichtung (1)
anschließendes Siebförderband (4) und einem dem
rückwärtigen Ende des Siebförderbandes (4) nachgeordneten Höhenförderer (7), der einen als engmaschiges Stabförderband ausgebildeten Innenförderer
(12) und einen in gleicher Richtung umlaufenden, als
weitmaschiges Stabförderband ausgebildeten Außenförderer (13) aufweist, der im Bereich des Fördertrums des Höhenförderers (7) zum Innenförderer
(12) parallel geführt ist und mit dem Innenförderer
(12) einen Förderraum begrenzt, der durch am Außenförderer (13) angebrachte Mitnehmer (25) in Abteile unterteilt ist. Dabei ist dem Außenförderer (13)
in einem sich an das Fördertrum des Höhenförderers (7) anschließenden Bereich außenseitig eine Zusatztrennvorrichtung (28) für Kartoffelkraut zugeordnet.

Fig. 2

EP 0 336 075 A1

# Kartoffelerntemaschine

Die Erfindung bezieht sich auf eine Kartoffelerntemaschine gemäß dem Oberbegriff des Anspruchs 1.

Bei einer bekannten Maschine dieser Art (DE-PS 35 29 464) bildet der Außenförderer unmittelbar selbst eine Trennvorrichtung für Kartoffelkraut, das beim Übergang des Gutstromes vom Siebförderband an den Höhenförderer vom Außenförderer zurückgehalten und auf der Außenseite des Außenförderers bis zu dessen Abwurfpunkt hin gefördert wird.

Der Erfindung liegt die Aufgabe zugrunde, eine Maschine der gattungsgemäßen Art so zu gestalten, daß nicht nur bereits von den Kartoffeln separiertes Kartoffelkraut, sondern auch mit Kartoffeln noch zusammenhängendes Kartoffelkraut sicher getrennt wird.

Die Erfindung löst diese Aufgabe ausgehend von einer Kartoffelerntemaschine nach dem Oberbegriff des Anspruchs 1 durch die im kennzeichnenden Teil dieses Anspruchs aufgeführten Merkmale. Hinsichtlich wesentlicher weiterer Ausgestaltungen wird auf die Ansprüche 2 bis 9 verwiesen.

Die Zusatztrennvorrichtung für Kartoffelkraut ergreift das auf der Außenseite des Außenförderers befindliche bzw. sich dorthin erstreckende Kartoffelkraut und bewirkt durch eine Relativbewegung des Kartoffelkrautes eine Abtrennung von etwa noch anhaftenden Kartoffeln, so daß auch derartiges Kraut sicher von der übrigen Gutmasse getrennt wird.

Die besonders bevorzugte Ausgestaltung der Zusatztrennvorrichtung gemäß Anspruch 2 schafft einen Förderspalt zwischen dem Fingerband und der Krautzupfwalze, durch den das gesamte an der Außenseite des Außenförderers befindliche bzw. sich dorthin erstreckende Kartoffelkraut hindurch- und über Kopf abgefördert wird, wonach es dann wieder auf der Außenseite des Außenförderers abgelegt und von diesem zu einem Abwurfpunkt transportiert wird.

Ein Ausführungsbeispiel des Gegenstands der Erfindung ist in der Zeichnung näher veranschaulicht. In der Zeichnung zeigen:

Fig. 1 eine schematische Ansicht einer Kartoffelerntemaschine nach der Erfindung in einer perspektivischen Skelettdarstellung, und

Fig. 2 eine abgebrochene vergrößerte Seitenansicht des oberen Endes des Höhenförderers der Kartoffelerntemaschine nach Fig. 1 mit erfindungsgemäßer Zusatztrennvorrichtung.

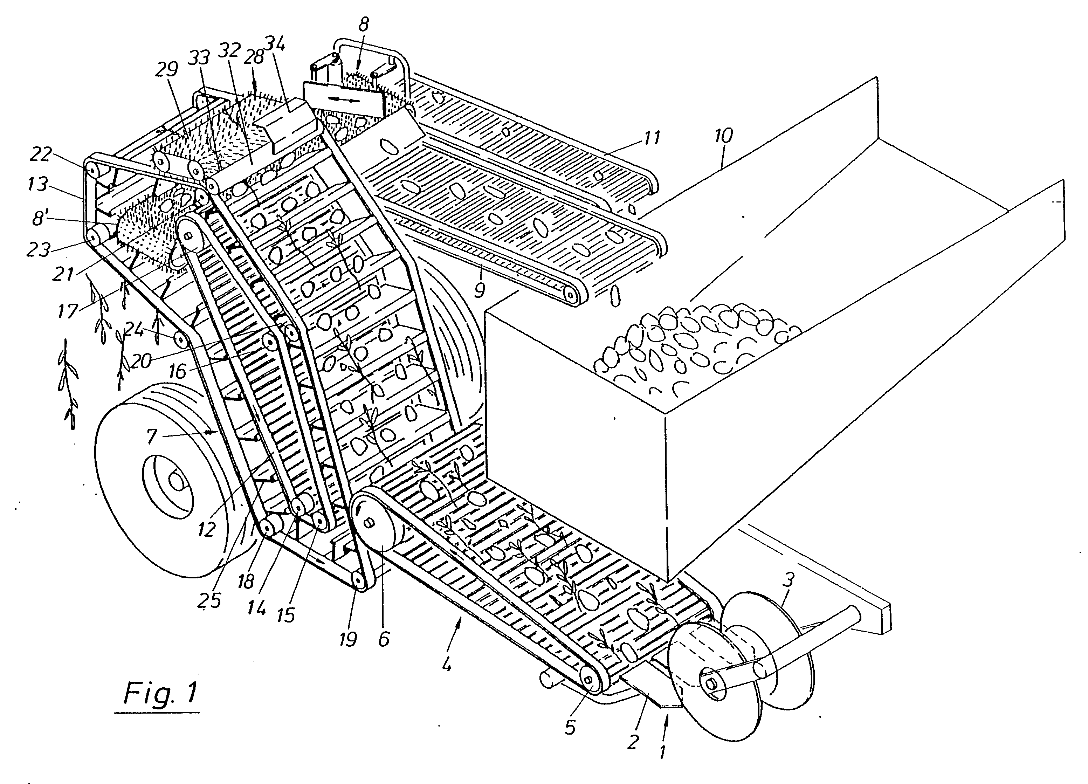

Die in Fig. 1 veranschaulichte Kartoffelerntemaschine umfaßt eine Rodevorrichtung 1, die von Rodescharen 2 und einer diesen vorauslaufenden Dammtrommel 3 gebildet ist, ein sich an die Rodevorrichtung 1 anschließendes Siebförderband 4, das als Stabförderband ausgebildet ist und um Umlenkrollen 5 bzw. Umlenk- und Antriebsrollen 6 endlos angetrieben umläuft, einen dem oberen bzw. rückwärtigen Ende des Siebförderbandes 4 unmittelbar nachgeordneten Höhenförderer 7, der zugleich eine Krauttrennvorrichtung bildet, sowie eine Steintrennvorrichtung 8, welche die von Steinen getrennten Kartoffeln an ein Förderband 9 zu einem Vorratsbehälter 10 übergibt und Steine entweder unmittelbar auf den Boden abwirft oder an einen Förderer 11 abgibt, der die Steine zu einem nicht dargestellten Sammelbehälter befördert.

Die Maschine kann als Anhängemaschine an einen landwirtschaftlichen Schlepper od.dgl. Zugfahrzeug angehängt werden oder auch als Selbstfahrer ausgebildet sein. Anstelle der dargestellten einreihigen kann auch eine zweireihige Ausführung vorgesehen sein. Für die einzelnen Aggregate der Maschine sind, soweit vonnöten, Antriebe vorgesehen, die von einzelnen Antriebsmotoren, z.B. Hydraulikmotoren, oder vn Transmissionen gebildet sind, die vom Zugfahrzeug her in Betrieb gesetzt werden.

Der Höhenförderer 7 ist von einem Doppelförderer gebildet, der ein innen umlaufendes, engmaschiges Stabförderband als Innenförderer 12 und ein in gleiche Richtung außen umlaufendes, zumindest im Bereich des Fördertrums des Höhenförderers 7 parallelgeführtes, weitmaschiges Stabförderband 13 als Außenförderer 13 umfaßt. Der Innenförderer 12 läuft um Umlenkrollen 14,15,16 sowie Umlenk- und Antriebsrollen 17 um, und der Außenförderer 13 umläuft Umlenkrollen 18,19,20,21,22,23 und 24, von denen z.B. die Umlenkrollen 22 zugleich auch Antriebsrollen bilden können. Das Fördertrum des Außenförderers 13 erstreckt sich zwischen den Umlenkrollen 19 und 22, und das Fördertrum des Innenförderers 12 zwischen den Umlenkrollen 15 und 17. Im Bereich zwischen den Förderrollen 15 und 17 sind der Innen- und der Außenförderer 12,13 zueinander parallel geführt. Die Steintrennvorrichtung 8 ist mit einem querlaufenden Fingerband 8' dem oberen Ende des Innenförderers 12 unmittelbar nachgeordnet und nimmt vom Fördertrum des Höhenförderers 7 hochgeförderte Kartoffeln und Steine zur Durchführung eines Steintrennvorganges auf. Das Fingerband 24 befindet sich dabei in einer Umführung des oberen Bereiches des Stabförderbandes 13 und steht mit seinem Abgabeende aus dem Umführungsbereich vor.

Einer der Förderer 12 oder 13, bevorzugtermaßen der den Krautförderer bildende Außenförderer 13, ist auf seiner dem anderen Innenförderer zugewandten Seite mit quergerichteten Mitnehmerstegen 25 besetzt, die den Zwischenraum zwischen den Fördertrums von Innen- und Außenförderer 12,13 in becherförmige Abteile unterteilen. Die Mitnehmerstege 25 sind dabei von Gummiplatten gebildet, die an ihrer freien Randkante in einer ösenförmig eingerollten, elastischen Lippe 26 auslaufen. Die Förderfläche 27 der Mitnehmerstege 25 schließt mit der von den Stäben 12' definierten Förderfläche des Innenförderers 12 in dessen Fördertrumbereich einen 90° betragenden oder von 90° geringfügig abweichenden Winkel ein. Bei einer fest eingestellten oder in Stufen oder stufenlos einstellbaren Differenz in den Umlaufgeschwindigkeiten zwischen den Förderern 12 und 13 können Roll- und damit Absiebungs- bzw. Säuberungseffekte erreicht werden, wie sie je nach Bodenverhältnissen erwünscht sind. Bevorzugt ist eine etwas höhere Umlaufgeschwindigkeit für den Innenförderer 12, bei der den Kartoffeln in den Abteilen eine leichte Rollbewegung erteilt wird, die bei leichten Böden zum Säubern ausreichend sein kann. Bei schweren Böden kann auch eine etwas höhere Umlaufgeschwindigkeit des Außenförderers 13 vorgesehen werden, um einen verstärkten Rollvorgang mit aggressiverer Säuberungswirkung zu erhalten. Im Falle von sandigen Böden reicht gegebenenfalls die Absiebwirkung durch das Siebförderband 4 aus, so daß beide Förderer 12,13 auch gleiche Umlaufgeschwindigkeiten aufweisen können. Das Verhältnis der Umlaufgeschwindigkeit der Förderer 12,13 zueinander soll einen Wert annehmen, der im Bereich zwischen 0,8 und 1,2 liegt.

Während die Stäbe 12' des Innenförderers 12 einen gegenseitigen Abstand in der Größenordnung von etwa 35 bis 44 mm aufweisen und damit engmaschig gestellt sind, haben die Stäbe 13' des Außenförderers 13 einen gegenseitigen Abstand, der im Bereich von 120 bis 240 mm liegen kann und bevorzugt etwa 160 mm beträgt. Die Mitnehmerstege 25 haben einen gegenseitigen Abstand, der dem Abstand der Stäbe 13' des Außenförderers 13 entspricht.

Die Umlaufebene des Höhenförderers 1 verläuft parallel zur Fahrtrichtung der Maschine, jedoch ist es auch möglich, diese Umlaufebene quer zur Fahrtrichtung auszurichten.

Bei dem Übergang des Gutstromes vom Siebförderband 4 an den Höhenförderer 7 von den Kartoffeln bereits getrenntes Kartoffelkraut wird auf der Arbeitsfläche des Außenförderers 13 zurückgehalten und im Zuge dessen Vorbewegung in Richtung zu einem Abwurfpunkt hin gefördert, die von der Umlenkung durch die Umlenkrollen 22 definiert ist.

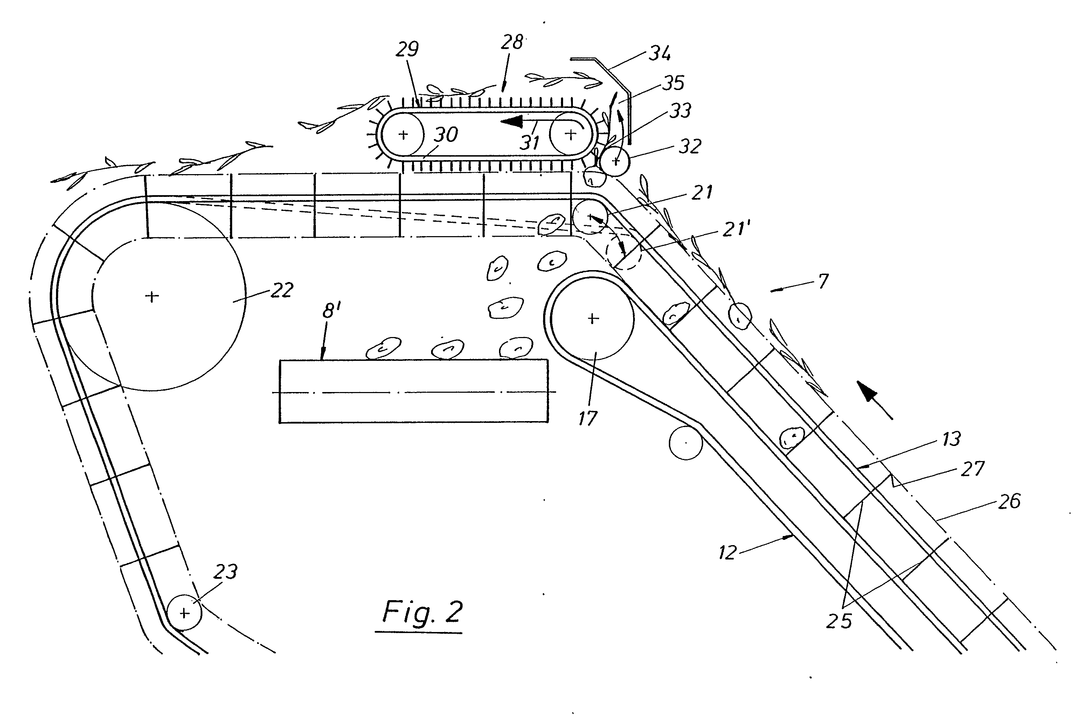

Die äußere Arbeitsfläche des Außenförderers kann durch die Außenseiten der Stäbe 13' oder wie in Fig. 2 bei 26 dargestellt durch auswärts vorstehende Außenkanten 27 der Mitnehmer 25 definiert sein.

Dem Außenförderer 13 ist in seinem sich an das Fördertrum des Höhenförderers 7 anschließenden Bereich eine Zusatztrennvorrichtung 28 für Kartoffelkraut zugeordnet. Die Zusatztrennvorrichtung 28 besteht dabei bevorzugt und wie dargestellt aus einem Fingerband 29, dessen Arbeitstrum 30 parallel zur gegenüberliegenden äußeren Arbeitsfläche 26 des Außenförderers 13 ausgerichtet ist. Entsprechend der Umlaufrichtung 31 für das Fingerband 29 führt dessen Arbeitstrum 30 eine entgegengesetzt zum benachbarten Abschnitt des Außenförderers 13 verlaufende Vorlaufbewegung aus, und an seinem dem Fördertrum des Höhenförderers 7 zugewandten Ende wirkt das Arbeitstrum 30 des Fingerbandes 29 mit einer Krautzupfwalze 32 zusammen, die bevorzugt als Glattwalze ausgebildet ist, jedoch auch als Profilwalze ausgebildet sein kann.

Der Endbereich des Arbeitstrums 30 des Fingerbandes 29 bildet mit dem ihm zugewandten Umfangsteil der Krautzupfwalze 32 einen Förderspalt 33 aus, der über oder nahe jenem Übergangsbereich des Außenförderers 13 gelegen ist, an dem dessen Bewegungsbahn einen horizontal ausgerichteten Verlauf annimmt. Mit anderen Worten liegt der Förderspalt 33 oberhalb der Umlenkrollen 21, die diesen Übergangsbereich definieren und in die gestrichelte Stellung 21 verlagerbar sind, um den Bahnverlauf des Außenförderers abzusenken und aus dem Wirkungsbereich des Fingerbandes 29 zu bewegen.

Oberhalb des Förderspaltes 33 zwischen dem Fingerband 29 und der Krautzupfwalze 32 ist ein Leitblech 34 angeordnet, das einen zum rückwärtigen Ende des Fingerbandes 29 hin offenen Leitkanal 35 begrenzt und sicherstellt, daß durch den Förderspalt 33 hindurchgefördertes Kartoffelkraut auf das obere Trum des Fingerbandes 29 gelangt.

Das Fingerband 29 und die Krautzupfwalze 32 haben im wesentlichen eine der Breite des Außenbandes 13 entsprechende Breite, so daß das auf der Arbeitsfläche 26 des Außenförderers 13 herangeförderte Kartoffelkraut auch in voller Breite erfaßt und durch den Förderspalt 33 hindurchgezogen wird.

Der Abstand der Zusatztrennvorrichtung 28 zur äußeren Arbeitsfläche 26 des Außenförderers 13 ist vorzugsweise stufenlos einstellbar. Dies gilt auch für den Abstand der Krautzupfwalze 32 zum Fingerband 29 und/oder zum Außenförderer 13, so daß den unterschiedlichsten Betriebsbedingungen Rechnung getragen werden kann. Bevorzugt reichen die äußeren Enden der bevorzugt aus Gummi bestehenden Finger des Fingerbandes 29 bis an die äußere Arbeitsfläche 26 des Außenförderers 13 heran, und auch die Umfangsfläche der Krautzupfwalze 32 befindet sich in einer dieser Arbeitsfläche 26 unmittelbar benachbarten Lage.

## Ansprüche

1. Kartoffelerntemaschine mit einer Rodevorrichtung (1), einem sich an die Rodevorrichtung (1) anschließenden Siebförderband (4) und einem dem rückwärtigen Ende des Siebförderbandes (4) nachgeordneten Höhenförderer (7), der einen als engmaschiges Stabförderband ausgebildeten Innenförderer (12) und einen in gleicher Richtung umlaufenden, als weitmaschiges Stabförderband ausgebildeten Außenförderer (13) umfaßt, der im Bereich des Fördertrums des Höhenförderers (7) zum Innenförderer (12) parallel geführt ist und mit dem Innenförderer (12) einen Förderraum begrenzt, der durch am Außenförderer (13) angebrachte Mitnehmer (25) in Abteile unterteilt ist, **dadurch gekennzeichnet**, daß dem Außenförderer (13) in einem sich an das Fördertrum des Höhenförderers (7) anschließenden Bereich außenseitig eine Zusatztrennvorrichtung (28) für Kartoffelkraut zugeordnet ist.

2. Maschine nach Anspruch 1, **dadurch gekennzeichnet**, daß die Zusatztrennvorrichtung (28) von einem Fingerband (29) gebildet ist, dessen der äußeren Arbeitsfläche (26) des Außenförderers (13) zugewandtes Arbeitstrum (30) parallel zur Bewegungsbahn des Außenförderers (13) ausgerichtet ist, eine entgegengesetzt zum benachbarten Abschnitt des Außenförderers (13) verlaufende Vorlaufbewegung ausführt und an seinem dem Fördertrum des Höhenförderers (7) zugewandten Ende mit einer Krautzupfwalze (32) zusammenwirkt.

3. Maschine nach Anspruch 2, **dadurch gekennzeichnet**, daß der Förderspalt (33) zwischen dem Fingerband (29) und der Krautzupfwalze (32) über oder nahe dem Übergangsbereich des Außenförderers (13) gelegen ist, an dem dessen Bewegungsbahn aus schräg ansteigendem Verlauf im Bereich des Fördertrums des Höhenförderers (7) in einen horizontal ausgerichteten Verlauf übergeht.

4. Maschine nach Anspruch 2 oder 3, **dadurch gekennzeichnet**, daß oberhalb des Förderspaltes (33) zwischen dem Fingerband (29) und der Krautzupfwalze (32) ein Leitblech (34) angeordnet ist, das einen zum rückwärtigen Ende des Fingerbandes (29) hin offenen Leitkanal (35) begrenzt.

5. Maschine nach einem der Ansprüche 1 bis 4, **dadurch gekennzeichnet**, daß das Fingerband (29) und die Krautzupfwalze (32) eine im wesentlichen der Breite des Außenbandes (13) entsprechende Breite aufweisen.

6. Maschine nach einem der Ansprüche 1 bis 5, **dadurch gekennzeichnet**, daß der Abstand der Zusatztrennvorrichtung (28) zur äußeren Arbeitsfläche (26) des Außenförderers (13) einstellbar ist.

7. Maschine nach einem oder mehreren der Ansprüche 1 bis 6, **dadurch gekennzeichnet**, daß die äußere Arbeitsfläche (26) des Außenförderers (13) durch den Bahnverlauf von auswärts vorstehenden Außenkanten (27) seiner Mitnehmer (25) definiert ist.

8. Maschinen nach einem der Ansprüche 1 bis 6, **dadurch gekennzeichnet**, daß der Abstand der Krautzupfwalze (32) zum Fingerband (29) und/oder zum Außenförderer (13) einstellbar ist.

9. Maschine nach einem der Ansprüche 1 bis 8, **dadurch gekennzeichnet**, daß die Umlaufgeschwindigkeit des Fingerbandes (29) einstellbar ist.

Fig. 1

Fig. 2

EP 0 336 075 A1

| | **EINSCHLÄGIGE DOKUMENTE** | | EP 89102385.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE - C1 - 3 529 464 (FRANZ GRIMME LANDMASCHINENFABRIK GMBH & CO. KG)<br><br>  * Gesamt *<br><br>-- | 1 | A 01 D 33/02<br><br>A 01 D 17/22 |
| Y | DE - A1 - 3 200 924 (FRANZ GRIMME LANDMASCHINENFABRIK GMBH & CO. KG)<br><br>  * Seite 6, Zeile 18ff; Seite 8, Zeile 13ff; Fig. 1 * | 1 | |
| A | * Fig. 1; Seite 25ff *<br><br>-- | 4 | |
| Y | SOVIET INVENTIONS ILLUSTRATED, Sektionen P,Q, Woche 8603, 26. Februar 1986<br><br>DERWENT PUBLICATIONS LTD. London, P12<br><br>  * SU-1165-268-A (GORY) *<br><br>-- | 2 | |
| Y | DE - A1 - 3 231 290 (NIEWOHNER SEN., BRUNO, NIEWOHNER JUN., BRUNO)<br><br>  * Fig. 1; Seite 8, 1. Absatz *<br><br>---- | 2 | **RECHERCHIERTE SACHGEBIETE (Int. Cl.4)**<br><br>A 01 D 17/00<br><br>A 01 D 21/00<br><br>A 01 D 33/00 |

Der vorliegende Recherchenbericht wurde für alle Patentansprüche erstellt.

| Recherchenort | Abschlußdatum der Recherche | Prüfer |
|---|---|---|
| WIEN | 08-05-1989 | SCHNEEMANN |